# EUROPEAN PATENT SPECIFICATION

(11) **EP 3 193 487 B1**
(45) Date of publication and mention of the grant of the patent: **19.06.2019**
(21) Application number: 16206759.9
(22) Date of filing: 23.12.2016
(51) Int. Cl.: H04L 29/06, H04L 9/08, H04L 9/12

(54) **ENCRYPTION/DECRYPTION DEVICE AND ENCRYPTION/DECRYPTION METHOD**
VER-/ENTSCHLÜSSELUNGSVORRICHTUNG UND VER-/SCHLÜSSELUNGSVERFAHREN
DISPOSITIF ET PROCÉDÉ DE CHIFFREMENT/DÉCHIFFREMENT

(30) Priority: 15.01.2016 KR 20160005630; 25.02.2016 KR 20160022800
(43) Date of publication of application: 19.07.2017
(73) Proprietor: Industry-Academic Cooperation Foundation Dankook University, Yongin-si, Gyeonggi-do 16890 (KR)
(72) Inventor: KIM, Joonmo, Gyeonggi-do 16890 (KR); CHOI, Younggeun, Gyeonggi-do 16890 (KR)
(74) Representative: Hübner, Gerd

(56) References cited:
- WO-A1-2015/166701
- US-A1- 2007 076 877
- US-A1- 2011 093 712
- US-A1- 2012 250 863
- US-A1- 2013 067 213
- US-A1- 2016 006 710

## Description

### Technical Field

The present invention relates to an encryption/decryption device and an encryption/decryption method. More specifically, the present disclosure relates to a technique that reliably eliminates the possibility of hacking in conventional encryption/decryption algorithms such as the RSA algorithm, in such a manner that keys used for encrypting/decrypting data are shared (distributed) by a plurality of encryption/decryption devices only when the encryption/decryption devices are physically connected to one another, and data is encrypted/decrypted by the shared key.

### Background Art

In a conventional encryption/decryption system, symmetric keys are transmitted by using RSA which is an asymmetric key system, and data is encrypted/decrypted by the symmetric keys thus transmitted. As known in the art, RSA generates a public key and a private key based on the number obtained by multiplying two large prime numbers (p, q), and encrypts data using the generated public key and private key.

In RSA, data is encrypted with a public key and transmitted over a shared communications network. In addition, the public key is disclosed and shared on the Internet. Accordingly, if a private key is found based on the public key, the encrypted data may be hacked. It is known, of course, that finding a private key based on a public key is a very difficult task. However, it is not mathematically impossible to discover a private key based on a public key. Moreover, it often happens that a private key is discovered in a mathematical way. Also, if a malicious attacker such as a hacker has calculated prime numbers (p, q) that can be obtained within an appropriate response time in a certain way, the private key can be discovered much easier.

Korean Laid-Open Patent Publication No. 2005-0017493 (published on February 22, 2005) discloses related art.

The prior art document US 2012/250863 A1 discloses an encryption/decryption method comprising
- generating a plurality of predetermined keys when a connection unit included in the encryption/decryption device is physically connected to another connection unit included in another encryption/decryption device,
- receiving data to be encrypted from the communications entity,
- encrypting the received data based on the first key among the predetermined keys, and
- transferring the encrypted data to the communications entity.

According encryption/decryption methods and devices are disclosed by the prior art references US 2016/006710 A1, US 2007/076877 A1 and US 2013/067213 A1.

### Summary of the Invention

An object of the present disclosure is to provide a technique that reliably eliminates the possibility of hacking keys used for encrypting and decrypting data during
processes of distributing and sharing the keys.

It is another object of the present disclosure to provide a technique that encrypts and transmits/receives data between communication entities, for example, between terminals or between a server and a terminal by employing the above technique.

In addition, another object of the present disclosure is to provide a technique that encrypts/decrypts and transmits/receives data used for financial transactions by employing the above-described technique.

In addition, yet another object of the present disclosure is to provide a technique that applies the above-described technique to an electronic money system to eliminate the possibility of hacking.

The above cited objects of the invention are achieved by an encryption/decryption device according to claim 1 and a corresponding method according to claim 11.

In accordance with an aspect of the present disclosure, there is provided an encryption/decryption device connected to a communications entity, the device including: a key storage unit configured to store a plurality of predetermined keys; a processing unit configured to receive a first key among the predetermined keys from the key storage unit and to encrypt data based on the received first key; a data port unit configured to receive data to be encrypted from the communications entity, to transfer the received data to the processing unit, to receive the encrypted data from the processing unit if the data transferred to the processing unit is encrypted by the processing unit based on the first key, and to transfer the encrypted data received from the processing unit to the communications entity; and a connection unit configured to physically connect the encryption/decryption device with another encryption/decryption device, wherein the predetermined keys are generated when the connection unit is connected to another connection unit included in the another encryption/decryption device.

The key storage unit may be connected to the processing unit via a key bus but is not connected to the data port unit via the key bus, and wherein the key bus may be a path through which the first key is transferred to the processing unit.

The predetermined keys stored in the key storage unit included in the encryption/decryption device may have the same values as keys stored in another key storage unit included in the another encryption/decryption device.

The encryption/decryption device may further include a random number generation unit (150) configured to generate random numbers, wherein the predetermined keys may be generated based on the random numbers generated by the random number generation (150) unit.

According to the invention the processing unit combines the data with an identifier known to both of the encryption/decryption device and the another encryption/decryption device to generate combined data, and then encrypts the combined data based on the first key, and the data port unit may receive the encrypted, combined data from the processing unit, and transfers the encrypted, combined data to the communications entity.

The processing unit further on generates the identifier based on at least two keys among the predetermined keys, wherein said at least two keys may be known to both of the encryption/decryption device and the another encryption/decryption device.

The encryption/decryption device further includes a random number generation unit configured to generate random numbers, wherein the identifier comprises a predetermined number of bits, wherein values of some of the bits are determined based on said at least two keys, and values of the remainder of the bits are determined by random numbers generated by the random number generation unit.

The encryption/decryption device may further include a protection unit configured to recognize that an abnormal action is made to the encryption/decryption device, and to delete the predetermined keys stored in the key storage unit upon recognizing that the abnormal action is made.

The predetermined keys may be modifiable to new keys.

The predetermined keys may be modifiable to the new keys which are generated based on a predetermined value known to the encryption/decryption device and the another encryption/decryption device.

The data port unit, upon receiving the encrypted data from the communications entity, may transfer the encrypted data to the processing unit. The processing unit may receive the predetermined keys from the key storage unit, and decrypts the encrypted data received from the processing unit based on one of the received predetermined keys. The data port unit may receive the decrypted data from the processing unit and transfers it to the communications entity.

The data port unit, upon receiving the encrypted, combined data from the communications entity, may transfer the encrypted, combined data to the processing unit. The processing unit may receive the predetermined keys from the key storage unit, and decrypts the encrypted, combined data received from the processing unit based on one of the received predetermined keys. The data port unit may receive the decrypted, combined data from the processing unit, separates data from the received combined data, and transfers the separated data to the communications entity.

In the encryption/decryption device, if an identifier obtained by decrypting the combined data is identical to the identifier known to both of the encryption/decryption device and the another encryption/decryption device, the processing unit may determine that the key used to decrypt the encrypted, combined data has been used to encrypt the combined data.

In accordance with an aspect of the presentinvention, there is provided an encryption/decryption method according to claim 11 using an encryption/decryption device connected to a communications entity, the method including: generating a plurality of predetermined keys when a connection unit included in the encryption/decryption device is physically connected to another connection unit included in another encryption/decryption device; receiving data to be encrypted from the communications entity; encrypting the received data based on a first key among the predetermined keys; and transferring the encrypted data to the communications entity.

The predetermined keys stored in the key storage unit included in the encryption/decryption device may have the same values as keys stored in another key storage unit included in the another encryption/decryption device.

The encryption/decryption method may further include generating random numbers. Said generating the plurality of predetermined keys may include generating the predetermined keys based on the random numbers.

According to the invention the encrypting includes generating combined data by combining the data with an identifier known to both of the encryption/decryption device and the another encryption/decryption device; and encrypting the combined data based on the first key, wherein said transferring the encrypted data to the communications entity includes transferring the encrypted, combined data to the communications entity.

Said generating combined data includes generating the identifier based on at least two keys among the predetermined keys, which are known to both of the encryption/decryption device and the another encryption/decryption device.

The encryption/decryption method further includes generating random numbers. Said generating the combined data further includes, when the identifier is composed of a predetermined number of bits, generating the identifier by obtaining values of some of the bits based on said at least two keys while obtaining values of the remainder of the bits based on the generated random numbers.

The encryption/decryption method may further include recognizing that an abnormal action is made to the encryption/decryption device, and deleting the predetermined keys stored in the key storage unit upon recognizing that the abnormal action is made.

The encryption/decryption method may further include modifying the predetermined keys to a plurality of new keys. Said modifying the predetermined keys to the new keys may include generating the new keys based on a predetermined value known to both of the encryption/decryption device and the another encryption/decryption device and modifying the predetermined keys to the new keys.

The encryption/decryption method may further include: receiving encrypted data from the communications entity; upon receiving the predetermined keys, decrypting the received, encrypted data based on one of the received keys; and transferring the decrypted data to the communications entity.

According to an exemplary embodiment of the present disclosure, the possibility that keys used for encrypting/decrypting data are hacked during the process of sharing them by communication entities is completely eliminated. Accordingly, it is possible to achieve a higher level of security when transmitting/receiving data between communication entities. In addition, it is possible to eliminate the loss caused by hacking in financial transactions or electronic money systems.

### Brief Description of the Drawings

Fig. 1 is a diagram illustrating encryption/decryption devices connected to communications entities according to an exemplary embodiment of the present disclosure;
Fig. 2 is a diagram illustrating the configuration of the encryption/decryption device according to an exemplary embodiment of the present disclosure;
Fig. 3 is a diagram illustrating encryption/decryption devices connected one another according to the exemplary embodiment of the present disclosure;
Fig. 4 is a diagram conceptually illustrating a key storage unit, a processing unit and a data port unit connected to one another in the encryption/decryption device according to the exemplary embodiment of the present disclosure;
Figs. 5A and 5B are diagrams conceptually illustrating an identifier according to the exemplary embodiment of the present disclosure; and
Fig. 6 is a flowchart for illustrating a procedure of an encryption/decryption method according to the exemplary embodiment of the present disclosure.

### Detailed Description of the Preferred Embodiments

Advantages and features of the present disclosure and methods to achieve them will become apparent from the descriptions of exemplary embodiments herein below with reference to the accompanying drawings. However, the present disclosure is not limited to exemplary embodiments disclosed herein but may be implemented in various different ways. The exemplary embodiments are provided for making the disclosure of the present disclosure thorough and for fully conveying the scope of the present disclosure to those skilled in the art. It is to be noted that the scope of the present disclosure is defined only by the claims.

Detailed descriptions of well-known functions and structures incorporated herein will be omitted to avoid obscuring the subject matter of the present disclosure. Further, the following terminologies are defined in consideration of the functions in the present disclosure and may be construed in different ways by the intention of users and operators. Therefore, the terms, such as those defined in commonly used dictionaries, should be interpreted as having a meaning that is consistent with their meaning in the context of the relevant art and/or the present application.

Prior to description, it is assumed that data encrypted in one of encryption/decryption devices according to an exemplary embodiment of the present disclosure can be decrypted in another one of the encryption/decryption devices.

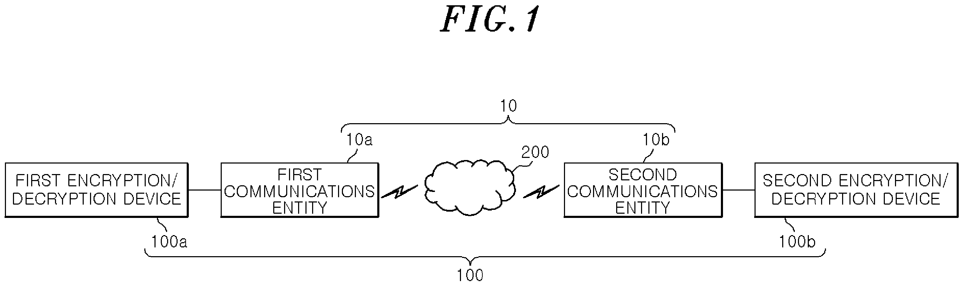

Fig. 1 is a diagram illustrating encryption/decryption devices connected to communications entities according to an exemplary embodiment of the present disclosure.

Referring to Fig. 1, an encryption/decryption device 100, i.e., a first encryption/decryption device 100a and a second encryption/decryption device 100b are connected to a communications entity 10, i.e., a first communications entity 10a and a second communications entity 10b, respectively. To this end, the communications entity 10 may include a connection unit (not shown) for connection to the encryption/decryption device 100.

The first communications entity 10a and the second communications entity 10b transmit/receive data over a network 200. The data may be encrypted data. The network 200 may be either a wireless communications network such as CDMA, 3G, 4G, LTE-A, Bluetooth, Wi-Fi, NFC or IR network, or a wired communications network such as a LAN.

The first communications entity 10a and the second communications entity 10b may be devices that transmit/receive data to/from each other. The first communications entity 10a and the second communications entity 10b may be those referred to as devices of the Internet of Things, for example, a server of a home network, and various devices performing communication with such a server. In addition, the first communications entity 10a and the second communications entity 10b may be wearable devices that communicate with each other. Further, the first communications entity 10a and the second communications entity 10b may be devices that record and transmit/receive an amount of electronic cash, balance, transaction details, and the like in implementing an electronic cash system. Also, the first communications entity 10a and the second communications entity 10b may be a server installed in a financial institution such as a bank, and a customer's device (PC, smart phone, etc.) who deal with the financial institution in an electronic financial transaction.

The first encryption/decryption device 100a encrypts data to be transmitted from the first communications entity 10a to the second communications entity 10b, such that the first communications entity 10a transmits the encrypted data to the second communications entity 10b. The second communications entity 10b receives the encrypted data from the first communications entity 10a. The second encryption/decryption device 100b decrypts the encrypted data and transfers the decrypted data to the second communications entity 10b. Although it has been described that the first encryption/decryption device 100a encrypts data, the first communications entity 10a transmits the encrypted data, the second communications entity 10b receives the encrypted data, and the second encryption/decryption device 100b decrypts the encrypted data, this is merely illustrative. The operations of the first encryption/decryption device 100a and the first communications entity 10a may be interchanged with those of the second encryption/decryption device 100b and the second communications entity 10b. Hereinafter, the encryption/decryption devices 100 for encrypting and decrypting data will be described in more detail.

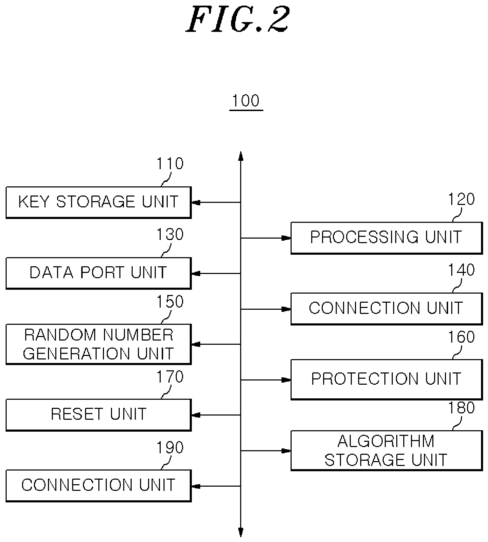

Fig. 2 is a diagram illustrating the configuration of the encryption/decryption device according to the exemplary embodiment of the present disclosure.

Referring to Fig. 2, the encryption/decryption device 100 includes a key storage unit 110, a processing unit 120, a data port unit 130, and a connection unit 140. The encryption/decryption device 100 may further include a random number generation unit 150, a protection unit 160, a reset unit 170, an algorithm storage unit 180, and a connection unit 190.

The encryption/decryption device 100 and the above-mentioned elements included therein may be implemented with a memory that stores program instructions to cause the device to perform its functions and a microprocessor that executes such instructions.

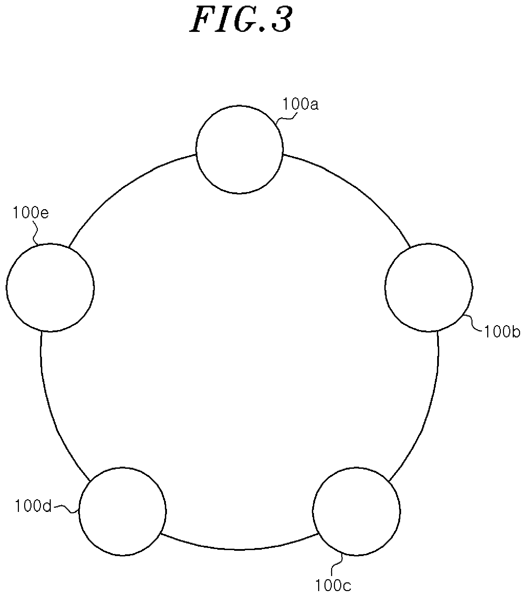

The connection unit 140 will be described first. The connection unit 140 connects encryption/decryption devices 100 with one another. For example, the connection unit 140 may be implemented as a hardware element, such as a connector. Referring to Fig. 3, the encryption/decryption devices 100 are physically connected to one another through the respective connection units 140 included therein. In doing so, the encryption/decryption devices 100 may be connected to one another in the form of a ring, for example, as shown in Fig. 3. That is, the connection unit 140 is to physically connect the encryption/decryption devices 100 to one another without online.

Referring back to Fig. 2, the key storage unit 110 stores predetermined keys. Each of the keys is used to encrypt data, and may be composed of a plurality of bits.

The key storage unit 110 may generate a plurality of keys based on an arbitrary number of random numbers, for example, 1,000 random numbers generated by the random number generation unit 150. The arbitrary number of the random numbers themselves may be used as the keys. Alternatively, the arbitrary number of the random numbers may be processed by the key storage unit 110 to then be used as the keys.

The reset unit 170 included in the encryption/decryption device 100 generates a seed (a value used for generating random numbers) and provides it to the random number generation unit 150. The seed is also transferred and provided to the random number generation unit 150 included in another encryption/decryption device 100 through the connection unit 140. When the random number generation unit 150 included in the another encryption/decryption device 100 has received the seed, it generates random numbers using the same seed. Therefore, the same random numbers are generated in each of the encryption/decryption devices 100, and accordingly, the encryption/decryption devices 100 generate keys having the same values.

The reset unit 170 will be described in more detail below. The reset unit 170 may include a button and the like through which the user performs input operations. In addition, the reset unit 170 is connected to the random number generation unit 150. When the encryption/decryption devices 100 are connected to one another through their respective connection units 140 and then the reset unit 170 of one of encryption/decryption devices 100 receives a user's input through the button or a touch, the reset unit 170 generates a seed to provide it to the random number generation unit 150. The seed is transmitted and provided to the random number generation unit 150 included in another encryption/decryption device 100.

As described above, the encryption/decryption devices 100 generate and share keys when they are physically connected to one another without online. That is, there is no process of transferring the keys to another encryption/decryption device 100 via any communications network, neither a wired communications nor wireless communications. Therefore, unlike the conventional RSA, it reliably eliminates the possibility that the keys are leaked or hacked in the process of distributing and sharing the keys.

It is to be noted that the above-described process in which the encryption/decryption devices 100 share the keys by using the seed is merely illustrative, and thus the idea of the present disclosure is not limited thereto. For example, the encryption/decryption devices 100 may share keys having the same values in such a manner that one of the encryption/decryption devices 100 generates the keys and then transferring the keys to the rest of the encryption/decryption devices 100 through the connection unit 140, that is, without transferring and providing the seed.

The keys stored in the key storage unit 110 may be updated. The update may be performed periodically or whenever necessary. The encryption/decryption devices 100 may have a predetermined rule for the timing of update, and therefore they can update the keys simultaneously.

In addition, since the update of keys is the generation of new keys, new keys may be generated based on the random numbers generated by the random number generation unit 150 at the time of update. When the keys are updated, the seed transferred to the random number generation unit 150 may be a predetermined value that is known among the encryption/decryption devices 100, for example, the first or last key before the update. That is, the encryption/decryption devices 100 generate keys with the same seed for updating the keys, and use the keys thus generated for updating. Therefore, even if the keys are updated, the encryption/decryption devices 100 can share the keys having the same values.

The processing unit 120 encrypts the data to be transmitted from the communications entity 10 to another communications entity 10. More specifically, a first key is selected from among the keys stored in the key storage unit 110. The first key may be chosen by the key storage unit 110 or the processing unit 120. The processing unit 120 encrypts data to be encrypted based on the first key. Any cryptographic algorithm known in the art may be used for encrypting the data based on the first key. Such a cryptographic algorithm may be stored in the algorithm storage unit 180, which may be a ROM. The data encrypted based on the first key can be decrypted only with the first key.

The processing unit 120 decrypts the encrypted data received by the communications entity 10 from another communications entity 10, and the algorithm for decrypting the encrypted data may also be stored in the algorithm storage unit 10. More specifically, the processing unit 120 decrypts the encrypted data using one of the keys stored in the key storage unit 110. Any known algorithm may be used as the algorithm for decrypting the encrypted data by using the key.

In order for the processing unit 120 to decrypt the encrypted data, it is necessary to know the key used in encrypting the data. Hereinafter, the description thereon will be given in more detail. In the following description, a processing unit for encrypting data is referred to as a first processing unit, and an encryption/decryption device including the first processing unit is referred to as a first encryption/decryption device. Further, a processing unit for decrypting data is referred to as a second processing unit, and an encryption/decryption device including the second processing unit is referred to as a second encryption/decryption device.

The first processing unit generates combined data in which an identifier (or a control block) is combined with data to be encrypted. The identifier is a value known to all of the encryption/decryption devices 100. The first processing unit receives the first key from the key storage unit 110 and encrypts the combined data based on the first key. The encrypted, combined data is sent from the first encryption/decryption device to the second encryption/decryption device.

The second encryption/decryption device receives the encrypted, combined data. The second processing unit decrypts the encrypted, combined data in the following process. However, it is to be noted that the following process is merely an example and the idea of the present disclosure is not limited thereto. Initially, the second processing unit receives keys one by one from the key storage unit 110. The second processing unit attempts to decrypt the encrypted, combined data based on each of the received keys. The second processing unit separates the identifier from the decrypted data. The second processing unit determines whether the decrypted identifier is a value known to the second encryption/decryption device. If the decrypted identifier is a value known to the second encryption/decryption device, it is determined that the received key has been used for the encryption, and the rest of the decrypted and combined data is treated as decrypted data. However, if the value is not known to the second encryption/decryption device, the second processing unit receives a new key from the key storage unit 110 and repeats the decryption process until a value known to the second encryption/decryption device is obtained.

As can be seen from the foregoing description, in order for a hacker to decrypt the encrypted, combined data, the hacker should know all of the keys, as well as the identifier. However, since the keys are shared (distributed) when the encryption/decryption devices 100 are physically connected to one another without online, there is no chance of leakage. In addition, the program for forming the identifier is installed in a ROM of the encryption/decryption device 100 during the initial production process, and thus the hacker cannot discover it. Therefore, by using the encryption/decryption device according to the exemplary embodiment of the present disclosure, the possibility of hacking can be fundamentally eliminated.

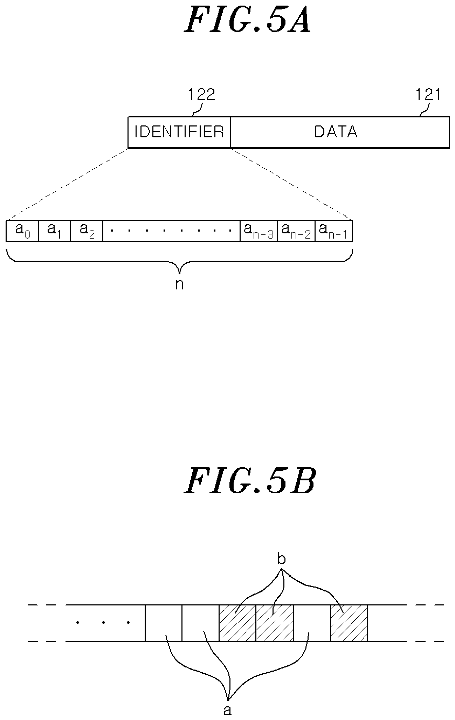

Hereinafter, the identifier will be described in more detail. As described above, the identifier is a value known to all of the encryption/decryption devices 100. Fig. 5A is a diagram conceptually illustrating combined data in which an identifier 122 and data 121 are combined. Referring to Fig. 5A, the identifier 122 may be composed of a predetermined number of bits, e.g., "n" bits.

These "n" bits may be filled with the values according to a preset rule that is known to the encryption/decryption devices 100. Fig. 5B is a diagram conceptually illustrating that "n" bits of an identifier are filled with the values according to the preset rule that is known to the encryption/decryption devices 100. Hereinafter, the rule will be described in more detail.

By using at least two predetermined keys which are known to the encryption/decryption devices 100, certain values are assigned to particular positions of the "n" bits. For example, let us assume that 50 keys, that is, the first key to the fiftieth key are known to the encryption/decryption devices 100. In addition, let us assume that a value obtained by performing a modular operation on the first key with "n" is the first value, and a value obtained by performing the modular operation on the second key with 2 is the second value, the second value is assigned to one of the "n" bits that is at the position indicated by the first value. Then, let us assume that a value obtained by performing the modular operation on the third key with n is the third value and a value obtained by performing the modular operation on the fourth key with 2 is the fourth value, the fourth value is assigned to one of the "n" bits that is at the position the bit indicated by the third value. In this manner, values are assigned to particular positions of the "n" bits, respectively, by using the fifty keys. If it is necessary to assign another value again to a position to which a value has already been assigned, the value obtained lately is assigned to the position. Thereafter, there may be bits among the n bits that are not assigned any values. Bits generated by the random number generation unit 150 are assigned to the bits to which no value is assigned. Fig. 5B is a diagram conceptually illustrating the generation of an identifier by the above-described process. Referring to Fig. 5B, the bits assigned values obtained by using at least two keys among the "n" bits are represented by "b", and bits assigned random numbers generated by the random number generation unit 150 are represented by "a".

The identifier generated by the first processing unit in the above manner may also be derived by the second processing unit using the same algorithm. That is, the second encryption/decryption device generates an identifier using the same algorithm as the first encryption/decryption device. Thereafter, upon receiving the encrypted, combined data from the first encryption/decryption device, the second processing unit attempts to decrypt the first "n" bits (identifier-part) of the encrypted, combined data with the predetermined keys one by one. For each result of the decryption, the second encryption/decryption device compares the bits only at the positions "b" of the decrypted identifier where the values are assigned, with the identifier generated by the second encryption/decryption device itself. If the values at the positions "b" are identical for both of the identifiers, it is determined that the key has been used for the encryption.

When the identifier thus generated is used, a hacker can hack the data only if she/he knows all of the keys, at least two keys used to generate the identifier, and the algorithm used to generate the identifier. However, as described above, since the keys are shared by the encryption/decryption devices 100 through hardware connection without online, there is no chance of leakage. In addition, the program for forming the identifier is installed in a ROM of the encryption/decryption device 100 during the initial production process, and thus the hacker cannot discover it. Therefore, by using the encryption/decryption device according to the exemplary embodiment of the present disclosure, the possibility of hacking can be fundamentally eliminated.

Referring back to Fig. 2, the data port unit 130 receives data to be encrypted from the communications entity 10 to transfer it to the processing unit 120. When the processing unit 120 encrypts the data, the data port unit 130 transfers the encrypted data to the communications entity 10.

In addition, the data port unit 130 receives the encrypted data from the communications entity 10 and transfers the encrypted data to the processing unit 120. In addition, when the processing unit 120 decrypts the encrypted data, the data port unit 130 transfers the decrypted data to the communications entity 10.

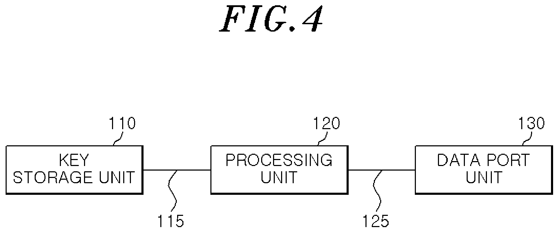

Referring to Fig. 4, the data port unit 130 is connected to the processing unit 120 via a data bus 125. The data bus 125 is a path through which data is transmitted and received. The key storage unit 110 is connected to the processing unit 120 via a key bus 115. The key bus 115 is a path through which a key stored in the key storage unit 110 is transferred to the processing unit 120.

Although the key storage unit 110 is connected to the processing unit 120 via the key bus 115, it is not directly connected to the data port unit 130. Accordingly, it is impossible to directly access the key storage unit 110 via the data port unit 130 from the outside, and in turn, it is impossible to access the keys stored in the key storage unit 110 from the outside.

The protection unit 160 recognizes that an action defined as abnormal is made to the encryption/decryption devices 100. When such an action is recognized, the protection unit 160 deletes the keys stored in the storage unit 110. The actions defined as abnormal may include, but is not limited to, an attempt to electronically copy keys stored in the key storage unit 110, an attempt to detect vibration or heat, etc.

The connection unit 190 connects the encryption/decryption device 100 with the communications entity 10. The connection unit 190 may be, but is not limited to, a hardware element such as a connector, or a module for wireless communications such as Bluetooth, NFC, WiFi, etc.

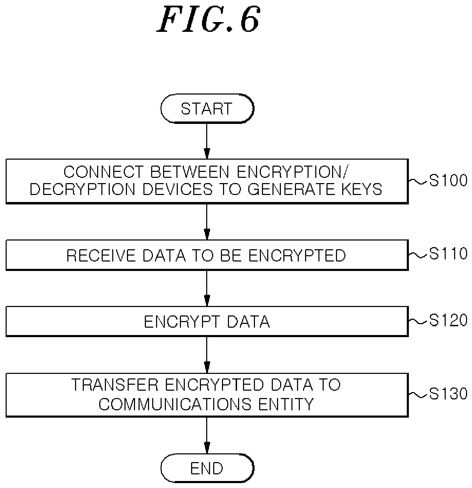

Fig. 6 is a flowchart for illustrating a procedure of an encryption/decryption method according to an exemplary embodiment of the present disclosure, which may be performed by the encryption/decryption device 100 described above. In addition, the encryption/decryption method to be described below may not include at least one of the steps to be described below or may further include an additional step. Further, the method may be performed in different orders from the order described below.

Referring to Fig. 6, the method includes: generating predetermined keys when a connection unit included in a encryption/decryption device is physically connected to another connection unit included in another encryption/decryption device (step S100); receiving data to be encrypted from a communications entity (step S110); encrypting the received data based on a first key among the keys (step S120); and transferring the encrypted data to the communications entity (step S130).

The encryption/decryption method is performed by the encryption/decryption device 100, and the function of each of the steps of the encryption/decryption method has already been described in detail with respect to the encryption/decryption device 100; and, therefore, detailed description thereof will be omitted.

As described above, according to an exemplary embodiment of the present disclosure, the possibility that keys used for encrypting/decrypting data are hacked during the process of sharing them by communication entities is fundamentally eliminated. Accordingly, it is possible to achieve a higher level of security when transmitting/receiving data between communication entities. In addition, it is possible to completely eliminate the loss caused by hacking in financial transactions or electronic cash systems.

Combinations of blocks in the accompanying drawings and steps in a flow chart may be performed according to computer program instructions. These computer program instructions can be installed in general-purpose computers, special-purpose computers or other processors of programmable data processing equipment. Therefore, the instructions executed by the processor of the computers or other programmable data processing device create means for performing functions described in the blocks of the block diagrams or in the steps of the flowchart. These computer program instructions can be stored in computer-usable or computer-readable memories which can assist in the computers or other processors of programmable data processing equipment to implement particular functions in particular manners. Therefore, the instructions stored in the computer-usable or computer-readable memories may be used to produce articles containing instruction means for performing the functions described in the blocks of the block diagrams or in the steps of the flowchart. The computer program instructions may also be installed in computers or other programmable data processing device. Therefore, a sequence of operation steps may be performed on the computers or other programmable data processing device to produce computer-executable processes. The instructions operating the computers or other programmable data processing device may provide steps for performing the functions described in the blocks of the block diagrams or in the steps of the flowchart.

In addition, the blocks or the steps may represent portions of modules, segments or codes including one or more executable instructions for executing a specified logical function(s). In addition, it should be noted that, in some alternative embodiments, the functions described in association with blocks or steps may be performed out of a specified sequence. For example, two consecutive blocks or steps may be performed substantially simultaneously or may be performed in the reverse order depending on the function to be performed.

While particular embodiments of the present disclosure have been disclosed, it is to be understood that various different modifications and combinations are possible without departing from the gist of the present disclosure by those skilled in the art. Accordingly, the exemplary embodiments described herein are merely illustrative and are not intended to limit the scope of the present disclosure. The technical idea of the present disclosure is not limited by the exemplary embodiments. The scope of protection sought by the present disclosure is defined by the appended claims and all equivalents thereof are construed to be within the true scope of the present disclosure.

## Claims

1. An encryption/decryption device connected to a communications entity, the device comprising:
a connection unit (140),
a key storage unit (110) configured to generate a plurality of predetermined keys when the connection unit (140) is Physically connected to another connection unit (140) included in another encryption/decryption device and store the plurality of predetermined keys;
a data port unit (130) configured to receive data to be encrypted from the communications entity;
a random number generation unit (150) configured to generate random numbers; and
a processing unit (120) configured to generate an identifier including a predetermined number of bits, combine the received data with the identifier to generate combined data and encrypt the combined data based on a first key selected among the predetermined keys from the key storage unit (110),
wherein the data port unit (130) transfers the encrypted, combined data to the communications entity; and
wherein the identifier indicates which key is used for encrypting the data among the predetermined keys, and
wherein the processing unit (120) determines values of some of the bits of the identifier based on at least two keys among the predetermined keys, and values of the remainder of the bits of the identifier based on the random numbers generated by the random number generation unit (150) .

2. The encryption/decryption device according to claim 1, wherein the key storage unit (110) is connected to the processing unit (120) via a key bus but is not connected to the data port unit (130) via the key bus, and wherein the key bus is a path through which the first key is transferred to the processing unit (120).

3. The encryption/decryption device according to claim 1, wherein the predetermined keys stored in the key storage unit (110) included in the encryption/decryption device have the same values as keys stored in another key storage (110) unit included in the another encryption/decryption device.

4. The encryption/decryption device according to claim 1, further comprising:
a random number generation unit (150) configured to generate random numbers,
wherein the predetermined keys are generated based on the random numbers generated by the random number generation unit (150).

5. The encryption/decryption device according to claim 1, further comprising:
a protection unit (160) configured to recognize that an abnormal action is made to the encryption/decryption device, and to delete the predetermined keys stored in the key storage unit (110) upon recognizing that the abnormal action is made.

6. The encryption/decryption device according to claim 1, wherein the predetermined keys are modifiable to new keys.

7. The encryption/decryption device according to claim 6, wherein, the predetermined keys are modifiable to the new keys which are generated based on a predetermined value known to the encryption/decryption device and the another encryption/decryption device.

8. The encryption/decryption device according to claim 1, wherein the data port unit (130), upon receiving the encrypted data from the communications entity, transfers the encrypted data to the processing unit (120),
wherein the processing unit (120) receives the predetermined keys from the key storage unit (110), and decrypts the encrypted data received from the processing unit (120) based on one of the received predetermined keys, and
wherein the data port unit (130) receives the decrypted data from the processing unit (120) and transfers it to the communications entity.

9. The encryption/decryption device according to claim 1, wherein the data port (130) unit, upon receiving the encrypted, combined data from the communications entity, transfers the encrypted, combined data to the processing unit (120),
wherein the processing unit (120) receives the predetermined keys from the key storage unit (110), and decrypts the encrypted, combined data received from the processing unit (120) based on one of the received predetermined keys, and
wherein the data port unit (130) receives the decrypted, combined data from the processing unit (120), separates data from the received combined data, and transfers the separated data to the communications entity.

10. The encryption/decryption device according to claim 9, wherein, if an identifier obtained by decrypting the combined data is identical to the identifier known to both of the encryption/decryption device and the another encryption/decryption device, the processing unit (120) determines that the key used to decrypt the encrypted, combined data has been used to encrypt the combined data.

11. An encryption/decryption method using an encryption/decryption device connected to a communications entity, the method comprising:
generating a plurality of predetermined keys when a connection unit (140) included in the encryption/decryption device is physically connected to another connection unit (140) included in another encryption/decryption device;
receiving data to be encrypted from the communications entity;
encrypting the received data based on a first key among the predetermined keys, wherein the encrypting comprises generating combined data by combining the data with an identifier known to both of the encryption/decryption device and the another encryption/decryption device; and encrypting the combined data based on the first key, and wherein further said generating combined data includes generating the identifier based on at least two keys among the predetermined keys, which are known to both of the encryption/decryption device and the another encryption/decryption device and further comprising generating random numbers, wherein said generating the combined data further includes, when the identifier is composed of a predetermined number of bits, generating the identifier by obtaining values of some of the bits based on said at least two keys while obtaining values of the remainder of the bits based on the generated random numbers, and
transferring the encrypted data to the communications entity and wherein said transferring the encrypted data to the communications entity includes transferring the encrypted, combined data to the communications entity.

12. The encryption/decryption method according to claim 11, wherein the predetermined keys stored in the key storage unit (110) included in the encryption/decryption device have the same values as keys stored in another key storage unit (110) included in the another encryption/decryption device.

13. The encryption/decryption method according to claim 11, further comprising:
generating random numbers,
wherein said generating the plurality of predetermined keys includes generating the predetermined keys based on the random numbers.

14. The encryption/decryption method according to claim 11, further comprising:
recognizing that an abnormal action is made to the encryption/decryption device; and
deleting the predetermined keys stored in the key storage unit (110) upon recognizing that the abnormal action is made.

15. The encryption/decryption method according to claim 11, further comprising:
modifying the predetermined keys to a plurality of new keys.

16. The encryption/decryption method according to claim 15, wherein said modifying the predetermined keys to the new keys comprises generating the new keys based on a predetermined value known to both of the encryption/decryption device and the another encryption/decryption device and modifying the predetermined keys to the new keys.

17. The encryption/decryption method according to claim 11, further comprising:
receiving encrypted data from the communications entity;
upon receiving the predetermined keys, decrypting the received, encrypted data based on one of the received keys; and
transferring the decrypted data to the communications entity.

## Patentansprüche

1. Eine Ver-/Entschlüsselungsvorrichtung verbunden mit einer Kommunikationseinheit, wobei die Vorrichtung umfasst:
eine Verbindungseinheit (140),
eine Schlüssel-Speichereinheit (110), die sowohl zur Erstellung einer Vielzahl von vorgegebenen Schlüsseln, wenn die Verbindungseinheit (140) physikalisch an eine andere Verbindungseinheit (140) angeschlossen wird, die in einer anderen Ver-/Entschlüsselungsvorrichtung enthalten ist, als auch dafür ausgebildet ist, diese Vielzahl von vorgegebenen Schlüsseln zu speichern;
eine Datenschnittstelleneinheit (130), die zum Empfang zu verschlüsselnder Daten von der Kommunikationseinheit ausgebildet ist;
eine Zufallszahlen-Generatoreinheit (150), die zur Erzeugung zufälliger Zahlen ausgebildet ist; und
eine Verarbeitungseinheit (120), die dafür ausgebildet ist, eine Kennung mit einer bestimmten Anzahl von Bits zu erstellen, die empfangenen Daten mit der Kennung zu kombinieren, um kombinierte Daten zu erstellen und diese auf Basis eines ersten ausgewählten Schlüssels der vorgegebenen Schlüssel aus der Schlüssel-Speichereinheit (110) zu verschlüsseln,
wobei die Datenschnittstelleneinheit (130) die verschlüsselten, kombinierten Daten an die Kommunikationseinheit übermittelt; und
wobei die Kennung angibt, welcher der vorgegebenen Schlüssel zur Verschlüsselung der Daten verwendet wird, und
wobei die Verarbeitungseinheit (120) Werte einiger der Bits der Kennung auf Basis von mindestens zwei der vorgegebenen Schlüssel, und die Werte der verbleibenden Bits der Kennung auf Basis der zufällig durch die Zufallszahlen-Generatoreinheit (150) erzeugten Zahlen bestimmt.

2. Die Ver-/Entschlüsselungsvorrichtung nach Anspruch 1, wobei die Schlüssel-Speichereinheit (110) über einen Schlüssel-Bus mit der Verarbeitungseinheit (120), jedoch nicht über den Schlüssel-Bus mit der Datenschnittstelleneinheit (130) verbunden ist, und wobei der Schlüssel-Bus einen Pfad darstellt, über den der erste Schlüssel an die Verarbeitungseinheit (120) übermittelt wird.

3. Die Ver-/Entschlüsselungsvorrichtung nach Anspruch 1, wobei die vorgegebenen Schlüssel, die in der Schlüssel-Speichereinheit (110) gespeichert sind, welche in der Ver-/Entschlüsselungsvorrichtung enthalten ist, dieselben Werte haben wie Schlüssel, die in einer anderen Schlüssel-Speichereinheit (110) gespeichert sind, die in der anderen Ver-/Entschlüsselungsvorrichtung enthalten ist.

4. Die Ver-/Entschlüsselungsvorrichtung nach Anspruch 1, weiterhin umfassend:
eine Zufallszahlen-Generatoreinheit (150), die zur Erzeugung zufälliger Zahlen ausgebildet ist,
wobei die vorgegebenen Schlüssel auf Basis der von der Zufallszahlen-Generatoreinheit (150) erstellten Zufallszahlen erzeugt werden.

5. Die Ver-/Entschlüsselungsvorrichtung nach Anspruch 1, weiterhin umfassend:
eine Schutzeinheit (160), die zur Erkennung abnormaler Aktivität in Bezug auf die Ver-/Entschlüsselungsvorrichtung ausgebildet ist, und bei Erkennen abnormaler Aktivität die vorgegebenen und in der Schlüssel-Speichereinheit (110) gespeicherten Schlüssel löscht.

6. Die Ver-/Entschlüsselungsvorrichtung nach Anspruch 1, wobei die vorgegebenen Schlüssel zu neuen Schlüsseln modifizierbar sind.

7. Die Ver-/Entschlüsselungsvorrichtung nach Anspruch 6, wobei die vorgegebenen Schlüssel zu den neuen Schlüsseln modifizierbar sind, welche auf Basis eines der Ver-/Entschlüsselungsvorrichtung und der weiteren Ver-/Entschlüsselungsvorrichtung bekannten, vorgegebenen Wertes generiert werden.

8. Die Ver-/Entschlüsselungsvorrichtung nach Anspruch 1, wobei die Datenschnittstelleneinheit (130) bei Empfang der verschlüsselten Daten von der Kommunikationseinheit diese an die Verarbeitungseinheit (120) übermittelt,
wobei die Verarbeitungseinheit (120) die vorgegebenen Schlüssel von der Schlüssel-Speichereinheit (110) empfängt und die von der Verarbeitungseinheit (120) empfangenen verschlüsselten Daten auf Basis eines der empfangenen vorgegebenen Schlüssel entschlüsselt, und
wobei die Datenschnittstelleneinheit (130) die entschlüsselten Daten von der Verarbeitungseinheit (120) empfängt und diese an die Kommunikationseinheit übermittelt.

9. Die Ver-/Entschlüsselungsvorrichtung nach Anspruch 1, wobei die Datenschnittstelleneinheit (130) bei Empfang der verschlüsselten, kombinierten Daten von der Kommunikationseinheit diese an die Verarbeitungseinheit (120) übermittelt,
wobei die Verarbeitungseinheit (120) die vorgegebenen Schlüssel von der Schlüssel-Speichereinheit (110) empfängt, und die verschlüsselten, kombinierten, von der Verarbeitungseinheit (120) empfangenen Daten auf Basis eines der empfangenen vorgegebenen Schlüssel entschlüsselt, und
wobei die Datenschnittstelleneinheit (130) die entschlüsselten, kombinierten Daten von der Verarbeitungseinheit (120) empfängt, Daten von den empfangenen, kombinierten Daten trennt, und die getrennten Daten an die Kommunikationseinheit übermittelt.

10. Die Ver-/Entschlüsselungsvorrichtung nach Anspruch 9, wobei, wenn eine durch das Entschlüsseln der kombinierten Daten gewonnene Kennung mit der Kennung identisch ist, die sowohl der Ver-/Entschlüsselungsvorrichtung als auch der anderen Ver-/Entschlüsselungsvorrichtung bekannt ist, erfasst die Verarbeitungseinheit (120), dass der zur Entschlüsselung der verschlüsselten, kombinierten Daten verwendete Schlüssel zur Verschlüsselung der kombinierten Daten verwendet wurde.

11. Ein Ver-/Entschlüsselungs-Verfahren, das eine Ver-/Entschlüsselungsvorrichtung verwendet, die mit einer Kommunikationseinheit verbunden ist, umfasst:
die Erzeugung einer Vielzahl von vorgegebenen Schlüsseln, wenn eine Verbindungseinheit (140), die in der Ver-/Entschlüsselungsvorrichtung enthalten ist, physikalisch an eine andere Verbindungseinheit (140) angeschlossen ist, die in einer anderen Ver-/Entschlüsselungsvorrichtung enthalten ist;
das Empfangen zu verschlüsselnder Daten von der Kommunikationseinheit;
das Verschlüsseln der empfangenen Daten auf Basis eines ersten Schlüssels unter den vorgegebenen Schlüsseln, wobei das Verschlüsseln die Erzeugung kombinierter Daten durch die Kombination der Daten mit einer Kennung umfasst, die sowohl der Ver-/Entschlüsselungsvorrichtung als auch der anderen Ver-/Entschlüsselungsvorrichtung bekannt ist; und das Verschlüsseln der kombinierten Daten auf Basis des ersten Schlüssels, und wobei weiterhin die Erzeugung dieser kombinierten Daten die Erzeugung der Kennung auf Basis von mindestens zwei Schlüsseln der vorgegebenen Schlüssel beinhaltet, welche sowohl der Ver-/Entschlüsselungsvorrichtung als auch der anderen Ver-/Entschlüsselungsvorrichtung bekannt sind, und weiterhin die Erzeugung von Zufallszahlen umfasst, wobei die Erzeugung der kombinierten Daten außerdem, wenn die Kennung sich aus einer vorgegebenen Anzahl von Bits zusammensetzt, die Erzeugung der Kennung durch den Erhalt von Werten einiger der Bits auf Basis der mindestens zwei Schlüssel umfasst, während der Erhalt von Werten der restlichen Bits auf Basis der erzeugten Zufallszahlen erfolgt, und
die Übermittlung der verschlüsselten Daten an die Kommunikationseinheit und wobei diese Übermittlung der verschlüsselten Daten an die Kommunikationseinheit die Übermittlung der verschlüsselten, kombinierten Daten an die Kommunikationseinheit umfasst.

12. Das Ver-/Entschlüsselungs-Verfahren nach Anspruch 11, wobei die vorgegebenen Schlüssel, die in der Schlüssel-Speichereinheit (110) gespeichert sind, welche in der Ver-/Entschlüsselungsvorrichtung enthalten ist, dieselben Werte haben wie Schlüssel, die in einer anderen Schlüssel-Speichereinheit (110) gespeichert sind, welche in der anderen Ver-/Entschlüsselungsvorrichtung enthalten ist.

13. Das Ver-/Entschlüsselungs-Verfahren nach Anspruch 11, weiter umfassend:
die Erzeugung von Zufallszahlen,
wobei die Erzeugung der Vielzahl von vorgegebenen Schlüsseln die Erzeugung der vorgegebenen Schlüssel auf Basis der Zufallszahlen einschließt.

14. Das Ver-/Entschlüsselungs-Verfahren nach Anspruch 11, weiter umfassend:
die Erkennung abnormaler Aktivität in Bezug auf die Ver-/Entschlüsselungsvorrichtung, und
die Löschung der vorgegebenen Schlüssel, die in der Schlüssel-Speichereinheit (110) gespeichert sind, bei Erkennen der abnormalen Aktivität.

15. Das Ver-/Entschlüsselungs-Verfahren nach Anspruch 11, weiter umfassend:
die Modifizierung der vorgegebenen Schlüssel zu einer Vielzahl neuer Schlüssel.

16. Das Ver-/Entschlüsselungs-Verfahren nach Anspruch 15, wobei die Modifizierung der vorgegebenen Schlüssel in die neuen Schlüssel die Erzeugung der neuen Schlüssel auf Basis eines vorgegebenen Werts, welcher sowohl der Ver-/Entschlüsselungsvorrichtung als auch der anderen Ver-/Entschlüsselungsvorrichtung bekannt ist, und die Modifizierung der vorgegebenen Schlüssel in die neuen Schlüssel umfasst.

17. Das Ver-/Entschlüsselungs-Verfahren nach Anspruch 11, weiter umfassend:
das Empfangen verschlüsselter Daten von der Kommunikationseinheit;
bei Empfang der vorgegebenen Schlüssel, Entschlüsselung der empfangenen, verschlüsselten Daten auf Basis der empfangenen Schlüssel; und
die Übermittlung der entschlüsselten Daten an die Kommunikationseinheit.

## Revendications

1. Un dispositif de chiffrement/déchiffrement connecté à une entité de communication, le dispositif comprenant :
une unité de connexion (140),
une unité de mémoire pour clés (110) configurée tant pour générer une pluralité de clés prédéterminées, quand l'unité de connexion (140) est physiquement connectée à une autre unité de connexion (140) contenue dans un autre dispositif de chiffrement/déchiffrement, que pour mémoriser la pluralité de clés prédéterminées ;
une unité de port de données (130) configurée pour réceptionner de données à chiffrer de la part de l'entité de communication;
une unité génératrice de nombres aléatoires (150) configurée pour générer de nombres aléatoires ; et
une unité de traitement (120) configurée pour générer un identifiant contenant un nombre de bits prédéterminé, pour combiner les données reçues avec l'identifiant afin de générer des données combinées et de chiffrer celles-ci à la base d'une première clé choisie parmi les clés prédéterminées de l'unité de mémoire pour clé (110),
l'unité de port de données (130) transmettant les données chiffrées et combinées à l'entité de communication ; et
l'identifiant indiquant quelle clé parmi les clés prédéterminées est utilisée pour chiffrer les données, et
l'unité de traitement (120) spécifiant des valeurs de certains des bits de l'identifiant à la base d'au moins deux clés parmi les clés prédéterminées, et les valeurs des bits restants de l'identifiant à la base des nombres aléatoires générés par l'unité génératrice de nombres aléatoires (150).

2. Le dispositif de chiffrement/déchiffrement selon la revendication 1, l'unité de mémoire pour clés (110) étant connectée à l'unité de traitement (120) via un bus de clés, toutefois n'étant pas connectée à l'unité de port de données (130) via le bus de clés, et le bus de clés étant un chemin par lequel la première clé est transmise à l'unité de traitement (120).

3. Le dispositif de chiffrement/déchiffrement selon la revendication 1, les clés prédéterminées, étant mémorisées dans l'unité de mémoire pour clés (110), celle-ci étant contenue dans le dispositif de chiffrement/déchiffrement, ayant les mêmes valeurs que des clés étant mémorisées dans une autre unité de mémoire pour clés (110) contenue dans l'autre dispositif de chiffrement/déchiffrement.

4. Le dispositif de chiffrement/déchiffrement selon la revendication 1, comprenant en outre :
une unité génératrice de nombres aléatoires (150) configurée pour générer des nombres aléatoires,
les clés prédéterminées étant générées à la base des nombres aléatoires générés par l'unité génératrice de nombres aléatoires (150).

5. Le dispositif de chiffrement/déchiffrement selon la revendication 1, comprenant en outre :
une unité de protection (160) configurée pour détecter qu'une action anormale a lieu envers le dispositif de chiffrement/déchiffrement, et pour effacer les clés prédéterminées et mémorisées dans l'unité de mémoire pour clés (110) à la détection d'une action anormale.

6. Le dispositif de chiffrement/déchiffrement selon la revendication 1, les clés prédéterminées étant modifiables en nouvelles clés.

7. Le dispositif de chiffrement/déchiffrement selon la revendication 6, les clés prédéterminées étant modifiables en les nouvelles clés, celles-ci étant générées à la base d'une valeur prédéterminée connue par le dispositif de chiffrement/déchiffrement ainsi que par l'autre dispositif de chiffrement/déchiffrement.

8. Le dispositif de chiffrement/déchiffrement selon la revendication 1, l'unité de port de données (130) transmettant les données chiffrées à l'unité de traitement (120) à la réception de celles-ci de la part de l'entité de communication,
l'unité de traitement (120) recevant les clés prédéterminées de la part de l'unité de mémoire pour clés (110) et déchiffrant les données chiffrées reçues de la part de l'unité de traitement (120) à la base d'une des clés prédéterminées reçues, et
l'unité de port de données (130) recevant les données déchiffrées de la part de l'unité de traitement (120) et transmettant celles-ci à l'entité de communication.

9. Le dispositif de chiffrement/déchiffrement selon la revendication 1, l'unité de port de données (130) transmettant les données chiffrées et combinées à l'unité de traitement (120) à la réception de celles-ci de la part de l'entité de communication,
l'unité de traitement (120) recevant les clés prédéterminées de la part de l'unité de mémoire pour clés (110), et déchiffrant les données chiffrées et combinées reçues de la part de l'unité de traitement (120) à la base d'une des clés prédéterminées reçues, et
l'unité de port de données (130) recevant les données déchiffrées et combinées de la part de l'unité de traitement (120), séparant des données des données combinées reçues, et transmettant les données séparées à l'entité de communication.

10. Le dispositif de chiffrement/déchiffrement selon la revendication 9, l'unité de traitement (120), quand un identifiant obtenu par le déchiffrage des données combinées est identique à l'identifiant connu tant par le dispositif de chiffrement/déchiffrement que par l'autre dispositif de chiffrement/déchiffrement, captant que la clé utilisée pour déchiffrer les données chiffrées et combinées a été utilisée pour chiffrer les données combinées.

11. Un procédé de chiffrement/déchiffrement utilisant un dispositif de chiffrement/déchiffrement connecté à une entité de communication, comprenant :
de générer une pluralité de clés prédéterminées, quand une unité de connexion (140) contenue dans le dispositif de chiffrement/déchiffrement est physiquement connectée à une autre unité de connexion (140) contenue dans un autre dispositif de chiffrement/déchiffrement;
de recevoir de données à chiffrer de la part de l'entité de communication ;
de chiffrer les données reçues à la base d'une première clé parmi les clés prédéterminées, le chiffrement comprenant de générer de données combinées en combinant les données avec un identifiant connu tant par le dispositif de chiffrement/déchiffrement que par l'autre dispositif de chiffrement/déchiffrement; et de chiffrer les données combinées à la base de la première clé, et en outre la génération de ces données combinées contenant de générer l'identifiant à la base d'au moins deux clés parmi les clés prédéterminées connues tant par le dispositif de chiffrement/déchiffrement que par l'autre dispositif de chiffrement/déchiffrement, et contenant en outre de générer des nombres aléatoires, ladite génération des données combinées comprenant en outre, quand l'identifiant se compose d'un nombre prédéfini de bits, de générer l'identifiant en obtenant de valeurs de certains des bits à la base desdites au moins deux clés, et en même temps obtenant de valeurs des bits restants à la base des nombres aléatoires générés, et
de transmettre les données chiffrées à l'entité de communication et cette transmission des données chiffrées à l'entité de communication comprenant de transmettre les données chiffrées et combinées à l'entité de communication.

12. Le procédé de chiffrement/déchiffrement selon la revendication 11, les clés prédéterminées, étant mémorisées dans l'unité de mémoire pour clés (110) contenue dans le dispositif de chiffrement/déchiffrement, ayant les mêmes valeurs que des clés étant mémorisées dans une autre unité de mémoire pour clés (110) contenue dans l'autre dispositif de chiffrement/déchiffrement.

13. Le procédé de chiffrement/déchiffrement selon la revendication 11, comprenant en outre :
de générer des nombres aléatoires,
la génération de la pluralité de clés prédéterminées comprenant de générer les clés prédéterminées à la base des nombres aléatoires.

14. Le procédé de chiffrement/déchiffrement selon la revendication 11, comprenant en outre :
de détecter qu'une action anormale a lieu envers le dispositif de chiffrement/déchiffrement, et
d'effacer les clés prédéterminées et mémorisées dans l'unité de mémoire pour clés (110) à la détection d'une action anormale.

15. Le procédé de chiffrement/déchiffrement selon la revendication 11, comprenant en outre :
de modifier les clés prédéterminées en une pluralité de nouvelles clés.

16. Le procédé de chiffrement/déchiffrement selon la revendication 15, ladite modification des clés prédéterminées en les nouvelles clés comprenant de générer les nouvelles clés à la base d'une valeur prédéterminée connue tant par le dispositif de chiffrement/déchiffrement que par l'autre dispositif de chiffrement/déchiffrement, et de modifier les clés prédéterminées en les nouvelles clés.

17. Le procédé de chiffrement/déchiffrement selon la revendication 11, comprenant en outre :
de recevoir des données chiffrées de la part de l'entité de communication ;
de déchiffrer les données chiffrées reçues à la base des clés reçues à la réception des clés prédéterminées; et
de transmettre les données déchiffrées à l'entité de communication.
